# EUROPEAN PATENT APPLICATION

(11) **EP 4 825 220 A1**
(43) Date of publication of application: **21.10.2026**
(21) Application number: 23961454.8
(22) Date of filing: 13.12.2023
(51) Int. Cl.: A24F 40/50

(54) **POWER SUPPLY UNIT FOR AEROSOL GENERATION DEVICE**

(71) Applicant: Japan Tobacco Inc., Tokyo 105-6927 (JP)
(72) Inventor: NAGAHAMA Toru, Tokyo 130-8603 (JP)
(74) Representative: Hoffmann Eitle
(86) International application number: PCT/JP2023/044698
(87) International publication number: WO 2025/126388

(57) **Abstract**

A power source unit (111) that can store electrical power is replaceably mounted on a power supply unit (110) of an inhalation device (100), which heats an aerosol source to generate an aerosol. The power supply unit (110) comprises: terminal connections (20a, 20b) for electrically connecting to terminals of the power source unit (111); and a control unit (116) for controlling the power supply unit (110). After the power source unit (111) is connected to the terminal connections (20a, 20b), the control unit (116) activates the power supply unit (110) when a predetermined operation is input by the user.

## Description

### TECHNICAL FIELD

The present disclosure relates to a power supply unit for an aerosol generation device.

### BACKGROUND ART

Inhalation devices that generate an aerosol with added flavor components and allow a user to inhale the generated aerosol, for example, are conventionally know as one type of aerosol generation device.. This kind of inhalation device typically generates the aerosol by heating an aerosol source by means of a heating unit, which is an electrically-resistive or inductively-heated heater, by supplying the heating unit with power from a power source such as a rechargeable battery.

In this type of inhalation device, it is known that the battery can be replaced by a user, as in the inhalation devices described in Patent Documents 1 to 5.

### CITATION LIST

### PATENT LITERATURE

PTL 1: CN 107373765 A
PTL 2: CN 208480616 U
PTL 3: CN 206507325 U
PTL 4: CN 204407377 U
PTL 5: CN 209609859 U

### SUMMARY OF INVENTION

### TECHNICAL PROBLEM

There was room for improvement in the power supply unit of an aerosol generation device to which a power source unit that stores power is replaceably attached, because of the possibility of occurrence of inconvenience due to the power supply unit being repeatedly activated and shut down during the replacement operation, for example, against the intention of the user.

The present disclosure provides a power supply unit of an aerosol generation device that can prevent the occurrence of inconvenience during the replacement of a power source unit.

### SOLUTION TO PROBLEM

The present disclosure relates to
a power supply unit for an aerosol generation device for generating an aerosol by heating an aerosol source, in which a replaceable power source unit that can store power is mounted, the power supply unit comprising:
a terminal connection for electrically connecting with a terminal of the power source unit; and
a control unit for controlling the power supply unit.

The control unit activates the power supply unit when a predetermined operation by a user is detected after the power source unit is connected to the terminal connection.

### ADVANTAGEOUS EFFECTS OF INVENTION

According to the present disclosure, the occurrence of inconvenience during replacement of the power source unit can be prevented.

### BRIEF DESCRIPTION OF DRAWINGS

Fig. 1 is a schematic diagram schematically showing a first configuration example of an inhalation device according to the present disclosure;
Fig. 2 is a schematic diagram schematically showing a second configuration example of an inhalation device according to the present disclosure;
Fig. 3 is an overall oblique view of the inhalation device according to the present disclosure;
Fig. 4 is a schematic diagram illustrating operating modes of the inhalation device according to the present disclosure;
Fig. 5 is a schematic explanatory diagram illustrating a first example of an aspect of insertion/removal of the power source unit in the inhalation device according to the present disclosure;
Fig. 6 is a schematic explanatory diagram illustrating a second example of an aspect of insertion/removal of the power source unit in the inhalation device according to the present disclosure;
Fig. 7 is a schematic explanatory diagram illustrating a third example of an aspect of insertion/removal of the power source unit in the inhalation device according to the present disclosure;
Fig. 8 is a schematic explanatory diagram illustrating a time series in a first example of replacement of the power source unit;
Fig. 9 is a schematic diagram schematically illustrating the operation of the power supply unit immediately after the power source unit is mounted in the first example of replacement of the power source unit;
Fig. 10 is a schematic diagram schematically illustrating the operation of the power supply unit when a physical action by a user is detected after the power source unit is mounted in the first example of replacement of the power source unit;
Fig. 11 is a flowchart illustrating an example of a process performed by the control unit from mounting the power source unit to completion of activation of the power supply unit in the first example of replacement of the power source unit;
Fig. 12 is a schematic explanatory diagram illustrating a time series in a second example of replacement of the power source unit;
Fig. 13 is a schematic diagram schematically illustrating the operation of the power supply unit immediately after the power source unit is mounted in the second example of replacement of the power source unit;
Fig. 14 is a schematic diagram schematically illustrating the operation of the power supply unit when an operation to change an operating mode by a user has been input after the power source unit is mounted in the second example of replacement of the power source unit;
Fig. 15 is a flowchart illustrating an example of a process performed by the control unit from mounting the power source unit to completion of activation of the power supply unit in the second example of replacement of the power source unit;
Fig. 16 is a schematic diagram illustrating the flow of supply of power supply from the power supply unit when a mode other than shipping mode is selected with the power source unit mounted;
Fig. 17 is a schematic diagram illustrating the flow of power supply of supply of power from the power supply unit after the power source unit has been removed before switching to the shipping mode;
Fig. 18 is a flowchart showing an example of a process performed by the control unit before removal of the power source unit in a variant of the second example of the operation when replacing the power source unit; and
Fig. 19 is a flowchart showing an example of a process performed by the control unit after the power source unit is mounted in the power supply unit in a variant of the second example of the operation when replacing of the power source unit.

### DESCRIPTION OF EMBODIMENTS

Embodiments of the power supply unit for an aerosol generation device according to the present disclosure will be described in detail below with reference to the drawings. The embodiments described below are exemplary cases in which the aerosol generation device according to the present disclosure is applied to an inhalation device. Note that the drawings are to be viewed in the orientation of the reference signs. Furthermore, hereinafter, identical or similar elements may be assigned identical or similar reference signs, and descriptions thereof may be omitted or simplified as appropriate.

### 1. Configuration Example of Inhalation Device

An inhalation device is a device for generating a substance to be inhaled by a user. Hereinafter, the substance generated by the inhalation device is be described as being an aerosol. Alternatively, the substance generated by the inhalation device may be a gas.

### 1-1. First Configuration Example of Inhalation Device

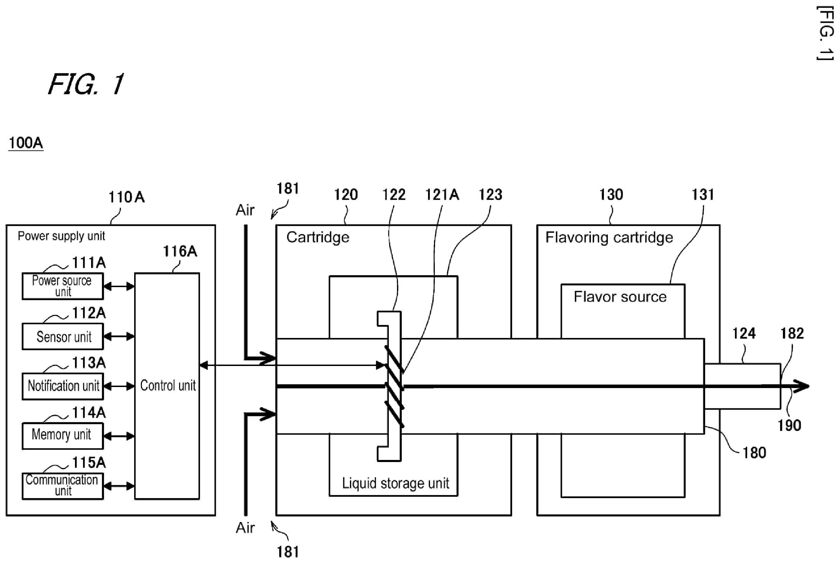

Fig. 1 is a schematic diagram schematically showing a first configuration example of an inhalation device. As shown in Fig. 1, an inhalation device 100A according to the present configuration example includes a power supply unit 110A, a cartridge 120, and a flavoring cartridge 130. The power supply unit 110A comprises a power source unit 111A, a sensor unit 112A, a notification unit 113A, a memory unit 114A, a communication unit 115A, and a control unit 116A. The cartridge 120 includes a heating unit 121A, a liquid guiding portion 122, and a liquid storage portion 123. The flavoring cartridge 130 includes a flavor source 131 and a mouthpiece 124. An air flow path 180 is formed in the cartridge 120 and the flavoring cartridge 130.

The power source unit 111A stores electrical power. The power source unit 111A then supplies the electrical power to each component of the inhalation device 100A in accordance with control performed by the control unit 116A. Furthermore, the power source unit 111A is configured to be chargeable by means of specific power received from an external power source. Here, the specific power is power that the inhalation device 100A is capable of receiving in terms of hardware, and may be, for example, direct current power having a predetermined voltage (for example., 5 to 20 [V]). The external power source can be an AC adapter (AC: alternating current) configured to be capable of outputting the specific power, for example. Also, the external power source is not limited to an AC adapter, and may be, for example, a portable charger (also referred to as a portable power bank), a personal computer (PC), a smartphone, a tablet terminal, or the like. The power source unit 111A may be configured, for example, by a rechargeable battery such as a lithium ion secondary battery. In the present embodiment, the power source unit 111A is removably attached to the power supply unit 110A by a user.

The sensor unit 112A acquires various types of information relating to the inhalation device 100A. The sensor unit 112A is configured by, for example, a pressure sensor such as a capacitor microphone, a flow rate sensor, or a temperature sensor, and so on, and acquires values associated with inhalation by a user.

As an example, the sensor unit 112A may include a pressure sensor (also referred to as a "puff sensor") capable of detecting a change in pressure (also referred to hereinafter as "internal pressure") in the inhalation device 100A caused by inhalation by the user. As another example, the sensor unit 112A may include a flow sensor capable of detecting a flow rate caused by inhalation by the user (hereinafter simply referred to as "flow rate"). As another example, the sensor unit 112A may include a temperature sensor (also referred to as a "puff thermistor") capable of measuring the temperature of the heating unit 121A or the temperature around the heating unit 121A.

Also, the sensor unit 112A may include a voltage sensor capable of measuring the terminal-to-terminal voltage of the power source unit 111A. In addition, the sensor unit 112A may include a temperature sensor capable of measuring the temperature of the power source unit 111A.

Also, the sensor unit 112A may be configured to include an input device, such as an operation button or a switch or the like, for accepting input of information from the user.

The notification unit 113A notifies the user of information. The notification unit 113A may, for example, be configured by a light-emitting device that emits light, a display device that displays images, a sound output device that outputs sound, or a vibration device that vibrates, and so on.

The memory unit 114A stores various information (for example, programs and data) for operation of the inhalation device 100A. The memory unit 114A is configured by a nonvolatile storage medium such as a flash memory, for example.

The communication unit 115A is a communication interface capable of performing communication conforming to any wired or wireless communication standard. Examples of communication standards that may be used include standards that employ Wi-Fi (registered trademark), Bluetooth (registered trademark), BLE (Bluetooth Low Energy) (registered trademark), NFC (Near-Field Communication), or LPWA (Low Power Wide Area).

The control unit 116A functions as an arithmetic processing device and a control device, and controls overall operation within the inhalation device 100A in accordance with various programs stored in the memory unit 114A, and so on. For example, the control unit 116A controls the supply of electricity (power supply) from the power source unit 111A to each component (for example, the heating unit 121A to be described later), and controls charging of the power source unit 111A by means of power received from the external power source. Note that the control unit 116A is realized by an electronic circuit such as a central processing unit (CPU) or a microprocessor, for example. Also, the control unit 116A may incorporate the functions of the communication unit 115A described above.

The liquid storage portion 123 stores an aerosol source. The aerosol source is atomized to generate an aerosol. The aerosol source is a polyhydric alcohol such as glycerol or propylene glycol, or a liquid such as water, for example. The aerosol source may include a tobacco-derived or non-tobacco-derived flavor component. If the inhalation device 100A is a medical inhaler such as a nebulizer, the aerosol source may include a drug.

The liquid guiding portion 122 guides the aerosol source, which is a liquid stored in the liquid storage portion 123, from the liquid storage portion 123, and holds the aerosol source. The liquid guiding portion 122 is, for example, a wick formed by twisting either a fibrous material such as glass fibers or a porous material such as a porous ceramic. In this case, the aerosol source stored in the liquid storage portion 123 is guided by the capillary effect of the wick.

The heating unit 121A heats the aerosol source to atomize the aerosol source, thereby generating the aerosol, for example. The heating unit 121A is formed by any material, such as a metal or polyimide, in any shape, such as coiled, film-like or blade-like. In the example shown in Fig. 1, the heating unit 121A is configured as a coil obtained by winding a heat generating resistor such as nichrome or stainless steel, and is wrapped around the liquid guiding portion 122. When the heating unit 121A generates heat, the aerosol source held in the liquid guiding portion 122 is heated and atomized, generating the aerosol. The heating unit 121A generates heat when supplied with electricity from the power source unit 111A.

As an example, the supply of electricity (power supply) to the heating unit 121A may be implemented when the sensor unit 112A has detected that the user has started inhaling and/or that predetermined information has been input. The supply of electricity to the heating unit 121A may then be stopped when the sensor unit 112A has detected that the user has finished inhaling and/or that predetermined information has been input.

Moreover, the heating unit 121A may be configured to generate an aerosol by means of vibration or induction heating. When the aerosol is generated by means of vibration, the inhalation device 100A comprises a vibration unit as the heating unit 121A. For example, the vibration unit is configured by a plate-shaped member comprising a piezoelectric ceramic functioning as an ultrasonic vibrator. When the vibration unit vibrates, the aerosol source which has been guided to a surface of the vibration unit by means of the liquid guiding portion 122 is then atomized by means of ultrasound generated as the vibration unit vibrates, thereby generating the aerosol.

Furthermore, when the aerosol is generated by means of induction heating, the inhalation device 100A comprises a susceptor and an electromagnetic induction source as the heating unit 121A. The susceptor is made of an electrically conductive material, such as a metal, and generates heat by means of electromagnetic induction. Furthermore, the susceptor is disposed adjacent to the liquid guiding portion 122. As an example, the susceptor is formed by a metallic conducting wire and is wound around the liquid guiding portion 122. The electromagnetic induction source causes the susceptor to generate heat by electromagnetic induction. The electromagnetic induction source is formed by a coiled conducting wire, for example, and generates a magnetic field when supplied with an AC current from the power source unit 111A. When a magnetic field is generated, eddy currents are generated in the susceptor, and Joule heat is generated. The aerosol source held in the liquid guiding portion 122 is then heated by this Joule heat and atomized, generating the aerosol.

The flavor source 131 is a component for imparting a flavor component to the aerosol. The flavor source 131 includes tobacco-derived or non-tobacco-derived flavor components. The aerosol source 131 may be, for example, a tobacco-derived substance such as cut tobacco, or a processed product obtained by molding a tobacco raw material into a granular form, a sheet form, or a powder form. Furthermore, the flavor source 131 may also include non-tobacco-derived materials made from plants other than tobacco (e.g., mint and herbs, etc.). As one example, the flavor source 131 may contain a flavoring component such as menthol. Furthermore, the flavor source 131 may be a stick-type member. When the inhalation device 100A is a medical inhaler, the flavor source 131 may contain a drug to be inhaled by a patient. It should be noted that the aerosol source 131 is not limited to a solid, and may equally be a polyhydric alcohol such as glycerin or propylene glycol, or a liquid such as water containing flavor components, for example. Furthermore, the flavor source 131 may be disposed inside a container such as a capsule.

The air flow path 180 is a flow path for air to be inhaled by the user. The air flow path 180 has a tubular structure with an air inflow hole 181, which is an inlet for air into the air flow path 180, and an air outflow hole 182, which is an outlet for air from the air flow path 180, at the two ends thereof. Part way along the air flow path 180, the liquid guiding portion 122 is disposed on the upstream side (the side closer to the air inflow hole 181), and the flavor source 131 is disposed on the downstream side (the side closer to the air outflow hole 182). Air that flows in through the air inflow hole 181 as the user inhales is mixed with the aerosol generated by the heating unit 121A and is transported through the flavor source 131 to the air outflow hole 182, as shown by the arrow 190. When the mixed fluid of aerosol and air passes through the flavor source 131, the flavor component contained in the flavor source 131 is added to the aerosol.

The mouthpiece 124 is a member that is held in the user's mouth during inhalation. The air outflow hole 182 is disposed in the mouthpiece 124. The user holds the mouthpiece 124 in their mouth and inhales, making it possible to draw the mixed fluid of aerosol and air into the oral cavity.

A configuration example of the inhalation device 100A has been described above. The inhalation device 100A is, of course, not limited to the configuration described above, and various configurations, such as those illustrated below by way of example may be adopted.

As an example, the inhalation device 100A need not include the flavoring cartridge 130. In this case, the cartridge 120 is provided with the mouthpiece 124.

As another example, the inhalation device 100A may further include a flavor source heating unit (not shown on the drawings) for heating the flavor source 131. The flavor source heating unit is configured in a film shape and is disposed so as to cover the outer periphery of the flavor source 131, for example. The flavor source heating unit then generates heat when supplied with power from the power source unit 111A, heating the flavor source 131 from the outer periphery thereof. It should be noted that the flavor source heating unit may also be configured with a blade-like form, piercing the flavor source 131 to heat the flavor source 131 from the inside, for example. Furthermore, the flavor source heating unit may be configured to heat the flavor source 131 by means of vibration or induction heating. Providing such a flavor source heating unit makes it possible to increase the temperature of the flavor source 131 and to increase the amount of flavor component added to the aerosol, as compared to a case in which the flavor source heating unit is not provided.

Furthermore, as another example, the inhalation device 100A may include a plurality of types of aerosol sources. A plurality of types of aerosol generated from the plurality of types of aerosol sources may be mixed within the air flow path 180 to cause a chemical reaction, thereby generating yet more other types of aerosol.

Furthermore, the means for atomizing the aerosol source is not limited to heating by the heating unit 121A. For example, the means for atomizing the aerosol source may be vibration atomization or induction heating.

### 1-2. Second Configuration Example of Inhalation Device

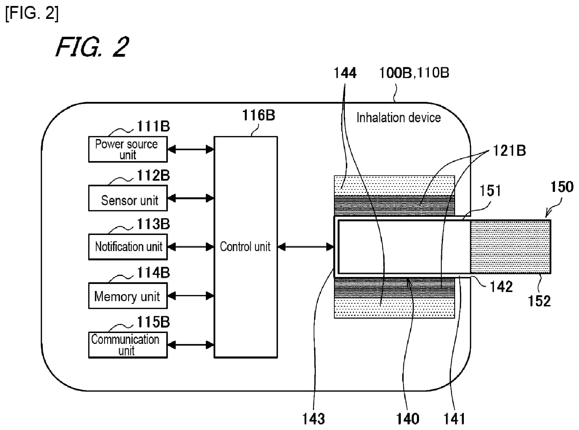

Fig. 2 is a schematic diagram schematically showing a second configuration example of an inhalation device. As shown in Fig. 2, an inhalation device 100B according to this configuration example comprises a power source unit 111B, a sensor unit 112B, a notification unit 113B, a memory unit 114B, a communication unit 115B, a control unit 116B, a heating unit 121B, an accommodating portion 140, and a heat insulating portion 144.

The power source unit 111B, sensor unit 112B, notification unit 113B, memory unit 114B, communication unit 115B, and control unit 116B are each substantially the same as the corresponding component included in the inhalation device 100A described above. Moreover, in the case of the inhalation device 100B shown in Fig. 2, the inhalation device 100B itself may also be referred to as the power supply unit 110B. In this embodiment, the power source unit 111B is removably attached to the inhalation device 100B by a user.

The accommodating portion 140 has an internal space 141, and holds a stick-type substrate 150 while accommodating a portion of the stick-type substrate 150 in the internal space 141. The accommodating portion 140 has an opening 142 allowing the internal space 141 to communicate with the outside, and accommodates the stick-type substrate 150 which has been inserted into the internal space 141 from the opening 142. For example, the accommodating portion 140 is a cylindrical body comprising the opening 142 and a bottom portion 143 serving as a bottom surface, and defines a columnar internal space 141. An air flow path for supplying air to the internal space 141 is connected to the accommodating portion 140. An air inflow hole, which is an inlet for air into the air flow path, is disposed in a side surface of the inhalation device 100, for example. An air outflow hole, which is an outlet for air from the air flow path to the internal space 141, is disposed in the bottom portion 143, for example.

The stick-type substrate 150 comprises a substrate portion 151 and a mouthpiece portion 152. The substrate portion 151 contains an aerosol source. The aerosol source includes a tobacco-derived or non-tobacco-derived flavor component. If the inhalation device 100B is a medical inhaler such as a nebulizer, the aerosol source may include a drug. The aerosol source may, for example, be a liquid such as water or a polyhydric alcohol, for example glycerin or propylene glycol, containing the tobacco-derived or non-tobacco-derived flavor component, or may be a solid including the tobacco-derived or non-tobacco-derived flavor component. In the state in which the stick-type substrate 150 is held in the accommodating portion 140, at least part of the substrate portion 151 is accommodated in the internal space 141, and at least part of the mouthpiece portion 152 protrudes from the opening 142. Then, when the user holds the mouthpiece portion 152 protruding from the opening 142 in their mouth and inhales, air flows into the internal space 141 via the air flow path, which is not illustrated on the drawings, and reaches the inside of the user's mouth together with the aerosol generated from the substrate portion 151.

In the example shown in Fig. 2, the heating unit 121B is configured as a film heater formed by laying out a conductive track afforded by a heating resistive element having a correlation between electrical resistance value and temperature, and is arranged to cover the outer circumference of the accommodating portion 140. Then, when the heating unit 121B generates heat, the substrate portion 151 of the stick-type substrate 150 is heated from the outer periphery, generating the aerosol. It should be noted that a heat generating resistor the same as that of the heating unit 121A described above may be used as the heat generating resistor of the heating unit 121B.

The heat insulating portion 144 prevents heat transfer from the heating unit 121B to other components. For example, the heat insulating portion 144 is configured from a vacuum heat insulating material or an aerogel heat insulating material, or the like.

A configuration example of the inhalation device 100B has been described above. The inhalation device 100B is, of course, not limited to the configuration described above, and various configurations, such as those illustrated below by way of example may be adopted.

As one example, the heating unit 121B may be configured with a blade-like form and may be arranged so as to protrude into the internal space 141 from the bottom portion 143 of the accommodating portion 140. In that case, the blade-like heating unit 121B is inserted into the substrate portion 151 of the stick-type substrate 150 and heats the substrate portion 151 of the stick-type substrate 150 from the inside. As another example, the heating unit 121B may be arranged so as to cover the bottom portion 143 of the accommodating portion 140. Furthermore, the heating unit 121B may be configured from a combination of two or more from among a first heating unit covering the outer circumference of the accommodating portion 140, a blade-like second heating unit, and a third heating unit covering the bottom portion 143 of the accommodating portion 140.

As another example, the accommodating portion 140 may include an opening and closing mechanism such as a hinge for opening and closing part of an outer casing that forms the internal space 141. Then, by opening and closing the outer casing, the accommodating portion 140 may accommodate and grip the stick-type substrate 150 that has been inserted into the internal space 141. In this case, the heating unit 121B may be provided on the clamping part of the accommodating portion 140, and may heat the stick-type substrate 150 while pressing the same.

Furthermore, the means for atomizing the aerosol source is not limited to heating by the heating unit 121B. For example, the means for atomizing the aerosol source may be induction heating. In that case, the inhalation device 100B comprises at least an electromagnetic induction source such as a coil for generating a magnetic field, instead of the heating unit 121B. A susceptor which generates heat by means of induction heating may be provided in the inhalation device 100B, or may be contained in the stick-type substrate 150.

Furthermore, the inhalation device 100B may additionally include the heating unit 121A, the liquid guiding portion 122, the liquid storage portion 123, and the air flow path 180 according to the first configuration example, and the air flow path 180 may supply air to the internal space 141. In this case, the mixed fluid of the aerosol generated by the heating unit 121A and air flows into the internal space 141 and is further mixed with the aerosol generated by the heating unit 121B, and reaches the oral cavity of the user.

Note that, hereinafter, the inhalation device 100A and the inhalation device 100B described above will also be referred to, without distinction, as the "inhalation device 100". Similarly, the power source unit 111A, 111B may be referred to as the "power source unit 111", the sensor unit 112A, 112B may be referred to as the "sensor unit 112", the notification unit 113A, 113B may be referred to as the "notification unit 113", the memory unit 114A, 114B may be referred to as the "memory unit 114", the communication unit 115A, 115B may be referred to as the "communication unit 115", the control unit 116A, 116B may be referred to as the "control unit 116", and the heating unit 121A, 121B may be referred to as the "heating unit 121".

### 2. External Configuration Example of Inhalation Device

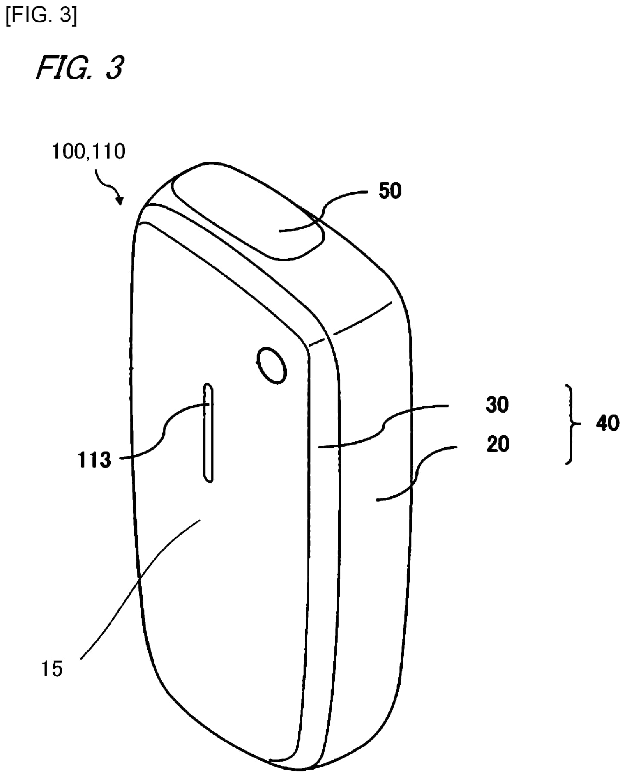

Fig. 3 is an overall oblique view of the inhalation device 100 according to the present embodiment. As shown in Fig. 3, the inhalation device 100 comprises, for example, a case 20, and a shutter 50. The case 20 houses the power supply unit 110 of the inhalation device 100.

The case 20 is also fitted with a panel 30. The panel 30 is attached to the case 20 to configure an outermost housing 40 of the aerosol generation device 100. Furthermore, the inhalation device 100 comprises the panel 30, so that even if the power supply unit 110 generates heat, the heat released to the outside can be reduced. In other words, the panel 30 functions to insulate heat generated from the interior of the power supply unit 110. The panel 30 is also formed so that the surface thereof is approximately a curved surface. When the panel 30 is attached to the case 20, the panel 30 then defines an internal space together with the surface of the case 20.

When a user presses on a predetermined portion of the surface of the panel 30 with their fingertips, the panel 30 deforms to form an indentation toward the case 20. As a result of this deformation of the panel 30, a protrusion (not shown on the drawings) provided on the surface of the panel 30 facing the case 20 comes into contact with an operation button 28 provided on the surface of the case 20, thereby pressing the operation button 28. In other words, the finger-pressed portion of the surface of the panel 30 constitutes an operation portion 15 that receives the user's operation.

### 3. Example of Operating Modes of Inhalation Device

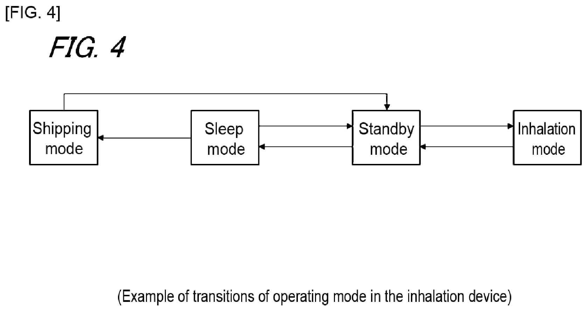

As shown in Fig. 4, the control unit 116 has a plurality of operating modes in which the inhalation device 100 is operated. In the present example, the control unit 116 has an inhalation mode as operating modes for operating the inhalation device 100. The control unit 116 controls the discharge of power from the power source unit 111 to cause the inhalation device 100 to operate in the inhalation mode, the standby mode, the sleep mode, and the shipping mode.

The inhalation mode is a mode in which heating control of the heating unit 121 is carried out. The control unit 116 carries out heating control of the heating unit 121 when the operating mode is switched to the inhalation mode.

The standby mode is a mode in which almost all functions are active except for heating control of the heating unit 121. The control unit 116 switches the operating mode from the standby mode to the inhalation mode when a predetermined operation is performed, such as an inhalation action by a user. Also, in the inhalation mode, the control unit 116 switches the operation mode from the inhalation mode to the standby mode when the heating control of the heating unit 121 ends, such as due to the time of energizing the heating unit 121 or the number of inhalations by the user reaching an upper limit.

The sleep mode is a mode n which the inhalation device 100 consumes less power than in the standby mode, and it can directly transition to the standby mode. Therefore, the control unit 116 can reduce the power consumption of the power source unit 111 by transitioning the inhalation device 100 to the sleep mode, while maintaining a state in which it is possible to return to other modes as required. When the inhalation device 100 is operating in the sleep mode, the sensor unit 112 can detect opening of the shutter 50, connection of a USB cable, operation of the operation portion 15, and so on, and it is possible to monitor the remaining battery charge, but the heating unit 121 cannot be operated immediately. The control unit 116 switches the operating mode from the sleep mode to the standby mode when a predetermined operation is performed, such as operation of the operation portion 15 by a user. Also, the control unit 116 switches the operating mode from the standby mode to the sleep mode when a predetermined condition is met, such as a state with no operation lasts for a predetermined time in the standby mode.

The shipping mode is a mode in which the main power supply path from the power supply portion 111 is cut off, and the quiescent current is significantly reduced to minimize power consumption of the power supply portion 111. In the shipping mode, the discharge from the power source unit 111 is limited to the minimum necessary, for example, only for the part of the sensor unit 112 that detects the connection of a USB cable and the part that detects when the operation unit 15 is operated, and for the part of the control unit 116 that changes the mode of operation of the inhalation device 100 based on the function of the sensor unit 112 that detects the connection of a USB cable and the function of the operation portion 15 that detects when the operation portion 15 is operated. The shipping mode is used, for example, during transportation after manufacturing and shipping of the inhalation device 100, or during long-term storage in a warehouse, or the like, to transport and store the inhalation device 100 with reduced power consumption of the power source unit 111. In this example, it is also used when replacing the power source unit 111, as described later. The control unit 116 switches the operating mode from the shipping mode to the standby mode when a predetermined operation is performed, such as operation of the operation portion 15 by a user or when an external power source is connected to the inhalation device 100. Note that the control unit 116 may switch the operating mode from the shipping mode to the sleep mode when a predetermined operation is performed, such as operation of the operation portion 15 by a user or an external power source is connected to the inhalation device 100.

When in the shipping mode, the control unit 116 transitions to the standby mode when a predetermined operation is performed by the user. Also, when in the sleep mode, the control unit 116 transitions to the standby mode when a predetermined operation is performed by the user, and transitions to the shipping mode when a predetermined operation is performed by the user (an operation different from the operation that transitions to the standby mode). Also, when in the standby mode, the control unit 116 transitions to the inhalation mode when a predetermined operation is performed by the user, and transitions to the sleep mode when a predetermined operation is performed by the user (an operation different from the operation which transitions to the inhalation mode). In addition, when it is in the inhalation mode, it transitions to the standby mode when the predetermined operation by the user is performed or when a predetermined condition is satisfied. Note that when in the standby mode, the control unit 116 may transition to the shipping mode when a predetermined operation is performed by the user. In this case, the predetermined operation by the user when transitioning from the sleep mode to the shipping mode and the predetermined operation by the user when transitioning from the standby mode to the shipping mode may be the same operation.

### 4. Insertion and Removal of the Power Source Unit

The power source unit 111 is removably attached to the power supply unit 110 by a user. Note that in the inhalation device 100, the insertion and removal direction of the stick-type substrate 150 relative to the inhalation device 100 is defined as the vertical direction, and in the inhalation device 100, and the side in which the flavor source 131 and the stick-type substrate 150 are inserted is defined as the upper side. In other words, the stick-type substrate 150 is inserted into the inhalation device 100 from the upper side. Also, the direction perpendicular to the vertical direction may be called the transverse direction, and a surface facing the transverse direction may be called a side surface.

It should be noted that although the first to third examples are described below as examples of insertion and removal aspects of the power source unit 111, the power source unit 111 may be removably attached to the power supply unit 110 by a user by aspects other than the first to third examples.

### 4-1. First Example of an Insertion and Removal Aspect of the Power Source Unit

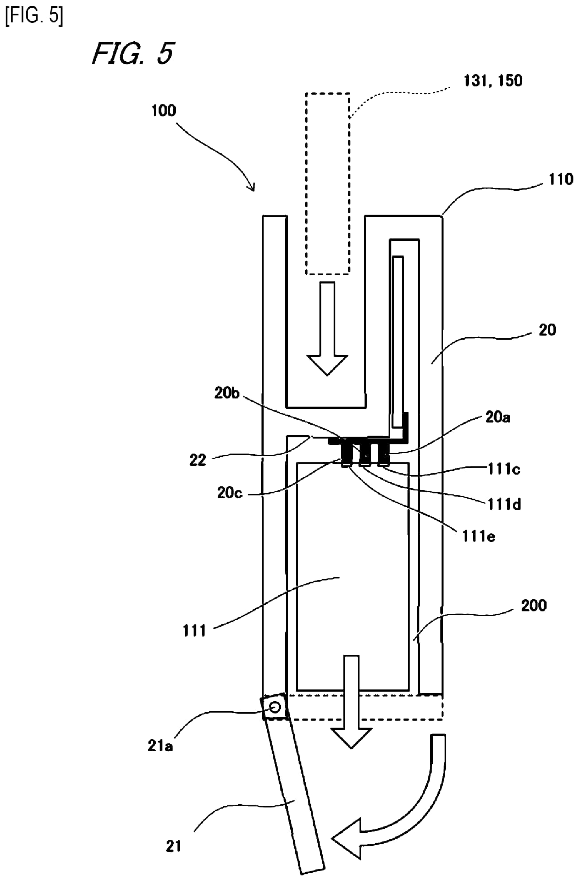

As shown in Fig. 5, the case 20 has a bottom wall portion 21 constituting at least a part of the bottom surface, and the bottom wall portion 21 is provided in the case 20 so that it can be opened and closed about a transversally extending hinge portion 21a.

In the lower region of the case 20, a power supply accommodating portion 200 is formed that can accommodate the power source unit 111. When the bottom wall portion 21 is opened, the power supply accommodating portion 200 is in communication with the outside of the case 20, allowing the power source unit 111 to be inserted into the power supply accommodating portion 200 from the bottom of the case 20.

The power source unit 111 comprises a positive electrode terminal 111c and a negative electrode terminal 111d, and a temperature terminal 111e through which an electrical signal relating to the temperature of the power source unit 111 flows. The case 20 is provided with a positive terminal connection 20a for electrically connecting with the positive electrode terminal 111c of the power source unit 111, a negative terminal connection 20b for electrically connecting with the negative electrode terminal 111d of the power source unit 111, and a temperature terminal connection 20c for electrically connecting with the temperature terminal 111e of the power source unit 111. The power source unit 111 is provided with a battery temperature sensor, which is not shown on the drawings. The battery temperature sensor is, for example, a thermistor. The battery temperature sensor outputs a detection signal indicating the electrical resistance value of its own resistor as a detection signal indicating a parameter related to the temperature of the power source unit 111. Also, the battery temperature sensor may also output a detection signal directly indicating the battery temperature. Then, the detection signal indicating a parameter related to the temperature of the power source unit 111 flows through the temperature terminal 111e.

When accommodated in the power supply accommodating portion 200, the power source unit 111 is held by the bottom wall portion 21 and a top wall portion 22 of the power supply accommodating portion 200. The power source unit 111 is held in the power supply accommodating portion 200 with the positive electrode terminal 111c in electrical connection with the positive terminal connection 20a, the negative electrode terminal 111d in electrical connection with the negative terminal connection 20b, and the temperature terminal 111e in electrical connection with the temperature terminal connection 20c.

In this example, the positive electrode terminal 111c, the negative electrode terminal 111d and the temperature terminal 111e are all provided on an upper surface of the power source unit 111, and the positive terminal connection 20a, the negative terminal connection 20b, and the temperature terminal connection 20c are provided in the top wall portion 22 of the power supply accommodating portion 200.

When the bottom wall portion 21 is opened while the power source unit 111 is housed in the power supply accommodating portion 200, the power supply accommodating portion 200 is in communication with the outside of the case 20, and the power source unit 111 can be removed from the power supply accommodating portion 200.

In this way, the power source unit 111 is removably attached to the power supply unit 110 by a user.

### 4-2.Second Example of an Insertion and Removal Aspect of the Power Source Unit

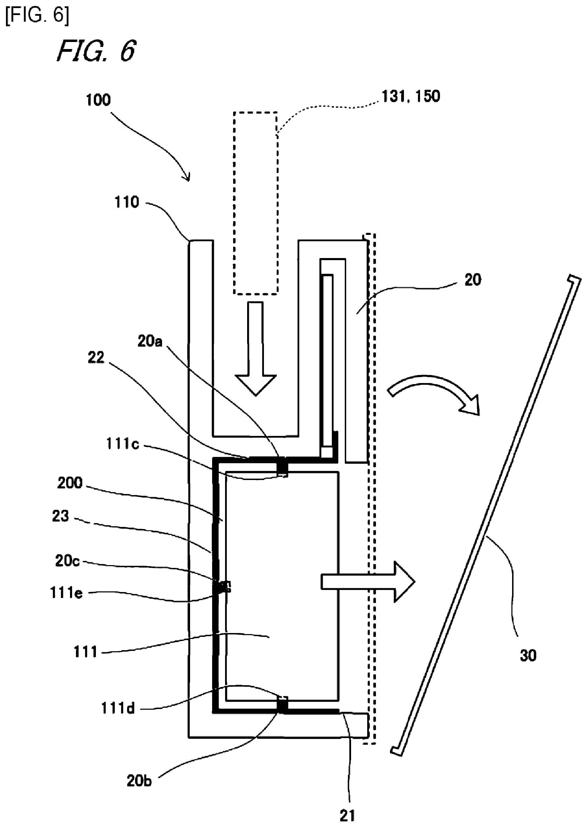

As shown in Fig. 6, in the lower region of the case 20, the power supply accommodating portion 200 is formed that can accommodate the power source unit 111. When the panel 30 is removed from the case 20, the power supply accommodating portion 200 communicates with the outside of the case 20, and the power source unit 111 can be inserted into the power supply accommodating portion 200 from the transverse direction of the case 20.

The power source unit 111 comprises the positive electrode terminal 111c and the negative electrode terminal 111d, and the temperature terminal 111e through which an electrical signal relating to the temperature of the power source unit 111 flows. The case 20 is provided with the positive terminal connection 20a for electrically connecting with the positive electrode terminal 111c of the power source unit 111, the negative terminal connection 20b for electrically connecting with the negative electrode terminal 111d of the power source unit 111, and the temperature terminal connection 20c for electrically connecting with the temperature terminal 111e of the power source unit 111.

When accommodated in the power supply accommodating portion 200, the power source unit 111 is held in the power supply accommodating portion 200. The power source unit 111 is held in the power supply accommodating portion 200 with the positive electrode terminal 111c in electrical connection with the positive terminal connection 20a, the negative electrode terminal 111d in electrical connection with the negative terminal connection 20b, and the temperature terminal 111e in electrical connection with the temperature terminal connection 20c.

In the present example, the positive electrode terminal 111c is provided on the upper surface of the power source unit 111, the negative electrode terminal 111d on the lower surface of the power source unit 111, the temperature terminal 111e on the side of the power source unit 111, and the positive terminal connection 20a is provided on the upper wall 22 of the power power supply accommodating portion 200, the negative terminal connection 20b is provided on the bottom wall portion 21 of the power supply accommodating portion 200 and the temperature terminal connection 20c on a side wall portion 23 of the power power supply accommodating portion 200.

When the panel 30 is removed from the case 20 while the power source unit 111 is housed in the power supply accommodating portion 200, the power supply accommodating portion 200 communicates with the outside of the case 20, and the power source unit 111 can be removed from the power supply accommodating portion 200.

In this way, the power source unit 111 is removably attached to the power supply unit 110 by a user.

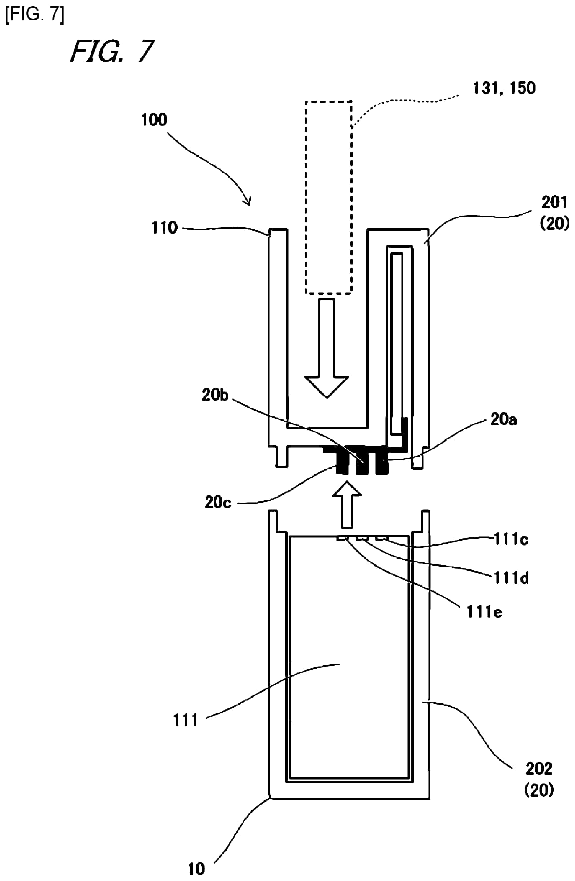

4-3. Third Example of an Insertion and Removal Aspect of the Power Source Unit As shown in Fig. 7, the case 20 comprises a top case 201 constituting the outer packaging of the upper region in the inhalation device 100 and a bottom case 202 constituting the outer packaging of the lower region in the inhalation device 100.

The bottom case 202 has an open top surface and houses the power source unit 111 inside. In this way, in the present example, the power source unit 111 and the bottom case 202 constitute a modularized battery pack 10.

The upper surface of the power source unit 111 is provided with the positive electrode terminal 111c and the negative electrode terminal 111d, and the temperature terminal 111e through which an electrical signal relating to the temperature of the power source unit 111 flows. At the lower end of the top case 201, the positive terminal connection 20a for electrically connecting with the positive electrode terminal 111c of the power source unit 111, the negative terminal connection 20b for electrically connecting with the negative electrode terminal 111d of the power source unit 111, and the temperature terminal connection 20c for electrically connecting with the temperature terminal 111e of the power source unit 111 are provided.

The modularized battery pack 10 with the power source unit 111 and the bottom case 202 is attached to the top case 201 from below. For example, both the top case 201 and the bottom case 202 may have a substantially cylindrical shape extending vertically, and threaded grooves have been machined in the outer circumferential surface of one of the lower end of the top case 201 and the upper end of the bottom case 202, and one of the inner circumferential surface of the upper end of the bottom case 202 and the lower end of the top case 201. The modularized battery pack 10 constituted from the power source unit 111 and the bottom case 202 may be attached to the top case 201 by screwing together the lower end of the top case 201 and the upper end of the bottom case 202. Also, for example, a magnet may be provided at one of the lower end of the top case 201 and the upper end of the bottom case 202, and the other of the upper end of the bottom case 202 and the lower end of the top case 201 may be formed of ferromagnetic material. Then, the lower end of the top case 201 and the upper end of the bottom case 202 are attracted by the magnetic force of the magnet, the modularized battery pack 10 with the power source unit 111 and the bottom case 202 may be attached to the top case 201. Also, for example, the bottom case 202 may have a locking portion such as a claw, and the modularized battery pack 10 with the power source unit 111 and the bottom case 202 may be attached to the top case 201 by locking the locking portion to the top case 201.

With the modularized battery pack 10 with the power source unit 111 and the bottom case 202 attached to the top case 201, the power source unit 111 is held with the positive electrode terminal 111c in electrical connection with the positive terminal connection 20a, the negative electrode terminal 111d in electrical connection with the negative terminal connection 20b, and the temperature terminal 111e in electrical connection with the temperature terminal connection 20c.

In this way, the modularized battery pack 10 with the power source unit 111 and the bottom case 202 is removably attached to the top case 201, and the power source unit 111 is removably attached to the power supply unit 110 by the user.

### 5. Operation when Power Source Unit is Replaced

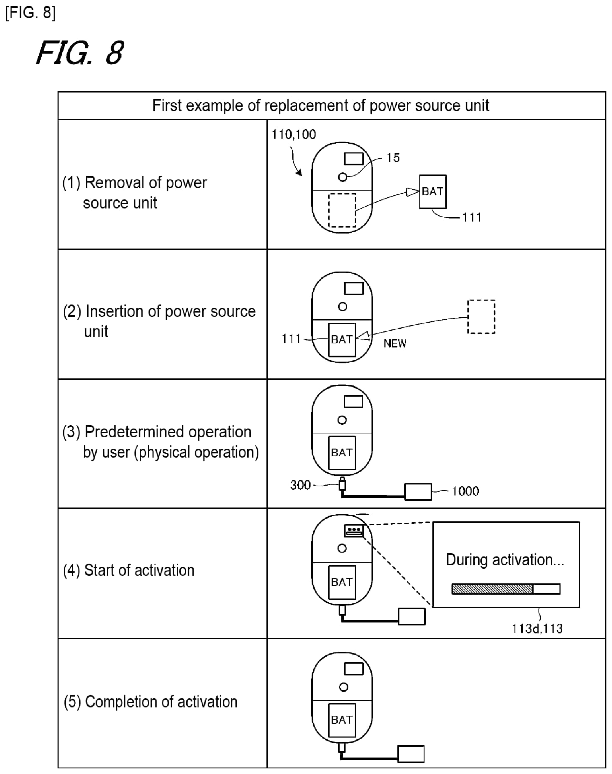

The operation of the power supply unit 110 in the event of replacement of the power source unit 111 is described below, specifically with reference to Figs. 8 to 19.

### 5-1. First Example of Operation when the Power Source Unit is Replaced

Fig. 8 shows a first example of user actions ((1) to (3) in Fig. 8) in chronological order, and operation of the power supply unit 110 ((4) and (5) in Fig. 8) when replacing a power source unit 111 (also referred to as "BAT" in Fig. 8) mounted in the power supply unit 110 with a new power source unit 111, due to aging, for example.

When replacing the power source unit 111, the user removes the power source unit 111 from the power supply unit 110 and installs a new power source unit 111. After mounting the new power source unit 111, activation of the power supply unit 110 is started by a predetermined physical operation by the user. The predetermined physical operation is electrically connecting the external power source 1000 via a USB cable 300, for example, to the power supply unit 110, or making a predetermined input to the operation portion 15. Between the start of activation of the power supply unit 110 and the completion of the activation, a boot animation is displayed on a display device 113d, which is an example of the notification unit 113, as a video showing the activation. After completion of activation of the power supply unit 110, the boot animation ends and the inhalation device 100 is ready for use.

As shown in (2) to (4) of Fig. 8, the power supply unit 110 is configured to not activate immediately when the power source unit 111 is mounted, but to activate when a predetermined physical operation is detected on the power supply unit 110 by a user after mounting the power source unit 111.

During the operation of replacement of the power source unit 111, for example when a user rotates or shifts the power source unit 111 relative to the positive and negative terminal connections 20a, 20b of the case 20, the mounted and unmounted states of the power source unit 111 may be temporarily repeated. If, for example, the power supply unit is configured to start automatically in response to the power source unit being mounted, the inconvenience that the power supply unit starts up and shuts down repeatedly against the intention of the user may occur during the replacement of the power source unit, possibly leading to a failure of the power supply unit. However, in this embodiment, the power supply unit 110 does not start automatically in response to the power source unit 111 being mounted, but is activated when the user performs the physical operation with the clear intention to start the power supply unit 110, so the occurrence of the inconvenience of repeated activation and shutdown of the power supply unit 110 during replacement of the power source unit 111 can be prevented.

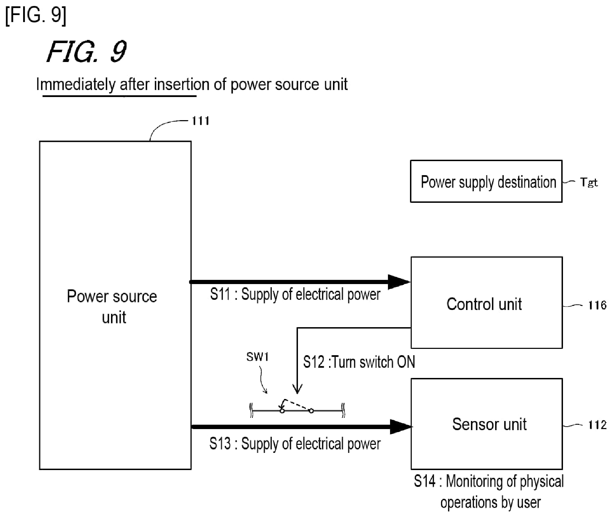

Fig. 9 shows the operation of the power supply unit 110 immediately after the power source unit 111 has been mounted. When the power source unit 111 is fitted into the power supply unit 110, the positive electrode terminal 111c and negative electrode terminal 111d of the power source unit 111 are electrically connected to the positive terminal connection 20a and the negative terminal connection 20b of the case 20, and power is supplied from the power source unit 111 to the control unit 116 (step S11). In this state, the control unit 116 is supplied with only minimal power, for example only enough power to allow signals to be exchanged with the sensor unit 112. In other words, most of the functions of the control unit 116 are not performed, for example no signals are exchanged with the notification unit 113, the memory unit 114, the communication unit 115, and the heating unit 121.

Next, the control unit 116 turns switch SW1 ON (step S12) to switch the electrical connection between the power source unit 111 and the sensor unit 112. This causes the power source unit 111 and the sensor unit 112 to be energized and power is supplied from the power source unit 111 to the sensor unit 112 (step S13). In this state, the sensor unit 112 is supplied with only minimal power, for example power is supplied to the portion that detects the connection of a USB cable 300, or the like, or detects that the operation portion 15 has been operated.

Steps S12, S13 may be performed after the positive electrode terminal 111c and the negative electrode terminal 111d of the power source unit 111 are electrically connected to the positive terminal connection 20a and the negative terminal connection 20b of the case 20. For example, in the First Example of an Insertion and Removal Aspect of the Power Source Unit as shown in Fig. 5, when the positive electrode terminal 111c and the negative electrode terminal 111d of the power source unit 111 are electrically connected to the positive terminal connection 20a and the negative terminal connection 20b of the case 20, and the power supply accommodating portion 200 is closed by the bottom wall portion 21, these steps may be performed.

The sensor unit 112 then monitors physical operations on the power supply unit 110 performed by the user using the power supplied from the power source unit 111 (step S14).

Physical operations performed by the user in the examples described above included connection of an external power source 1000 to the power supply unit 110 via the USB cable 300, and input to the operation portion 15 provided in the power supply unit 110, but these are not limitations. For example, the physical operation may be to close the power supply accommodating portion 200 with the bottom wall portion 21 or panel 30. The closure by the bottom wall portion 21 or panel 30 is detectable, for example, by a Hall sensor, which is an example of the sensor unit 112. Also, when the power supply unit 110 is configured to be able to receive power supplied from the external power source 1000 in a contactless manner, the physical operation by the user may be the act of arranging the power supply unit 110 in the contactless charger.

Such user operation is an operation performed with a clear intention for activation of the power supply unit 110, and can more reliably prevent the occurrence of the inconvenience of repeated activation and shutdown of the power supply unit 110 against the intention of the user during replacement of the power source unit 111.

Note that the physical operation by the user may be more than one operation. For example, in step S14, the sensor unit 112 may monitor whether two physical actions are performed by the user to activate the power supply unit 110: the closure of the power supply accommodating portion 200 by the bottom wall portion 21 or panel 30, and the input of the operation portion 15. Also, if the physical action by the user is more than one operation, the order in which these operations are performed may be prescribed. For example, at step S14, the sensor unit 112 may, as a physical action by the user, monitor that two operations are performed in this order: closure of the power supply accommodating portion 200 by the bottom wall portion 21 or panel 30, and input from the operation portion 15.

From steps S11 to S14, the power supply unit 110 is not activated and the control unit 116 and sensor unit 112 remain operating with minimal power supplied from the power source unit 111. In other words, the control unit 116 restricts power from being supplied by the power supply unit 110 to predetermined power supply destinations Tgt until a physical operation of the user is detected by the sensor unit 112. Here, the predetermined power supply destinations Tgt include, for example, the previously mentioned notification unit 113, the memory unit 114, the communication unit 115, the heating unit 121, and so on. The predetermined power destinations Tgt may also include, for example, a battery level meter (not shown on the drawings) capable of measuring the remaining charge of the power source unit 111.

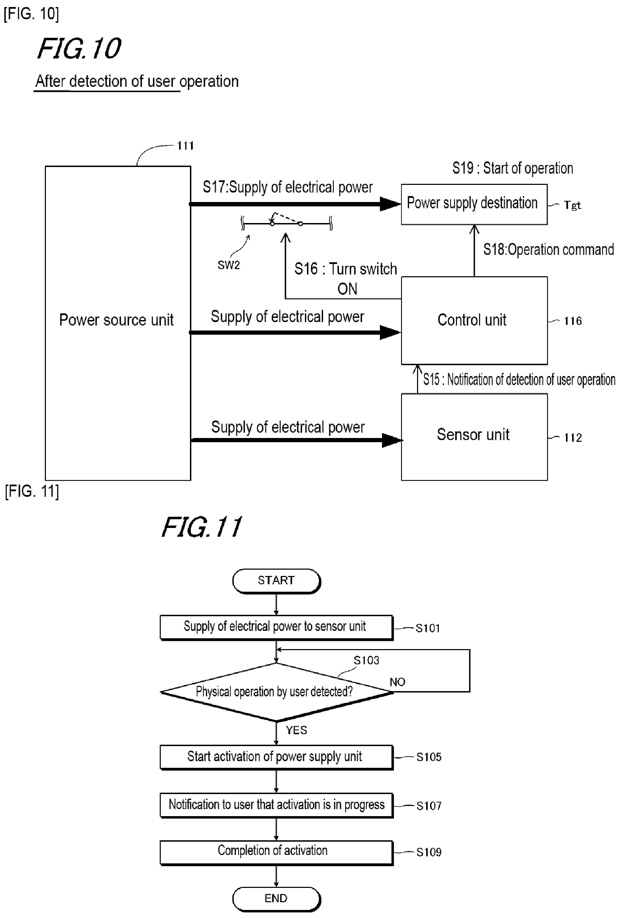

Fig. 10 shows the operation of the power supply unit 110 after step S14 when a physical action by a user is detected by the sensor unit 112. When the sensor unit 112 detects a physical action by the user, it notifies the control unit 116 that the action has taken place (step S15).

The control unit 116 then turns ON the switch SW2 (step S16), which switches the electrical connection between the power source unit 111 and the power supply destination Tgt in response to the notification from the sensor unit 112. This energizes the power source unit 111 and the power supply destination Tgt, and supplies power from the power source unit 111 to the power supply destination Tgt (step S17).

The control unit 116 then provides an operation command to the power supply destination Tgt (step S18). This starts operation of the power supply destination Tgt (step S19) and starts activation of the power supply unit 110. During activation of the power supply unit 110, for example, the notification unit 113 performs a notification such as a boot animation. The communication unit 115 also communicates with a mobile terminal 400. Also, the control unit 116 performs the process of changing various control values (such as nominal voltage and battery capacity) when a new power source unit 111 is installed.

Fig. 11 is a flowchart illustrating an example of the process performed by the control unit 116 from the mounting of the power source unit 111 to the completion of activation of the power supply unit 110. Note that portions that overlap with those already explained will be omitted as appropriate.

When the power source unit 111 is fitted in the power supply unit 110, the control unit 116 supplies power to the sensor unit 112 (step S101). Step S101 corresponds to steps S12 to S13 previously described.

Next, the control unit 116 determines whether or not the sensor unit 112 has detected a predetermined physical operation by the user (step S103). If the sensor 112 does not detect a physical operation by the user (step S103: NO), the control unit 116 repeatedly monitors this action at predetermined time intervals.

If the sensor unit 112 detects a physical action by the user (step S103: YES), the control unit 116 initiates activation of the power supply unit 110 (step S105). Step S105 corresponds to steps S16 to S19 previously described.

During activation of the power supply unit 110, the control unit 116 notifies the user via the notification unit 113 that the power supply unit 110 is being activated (step S107). Note that this notification may be performed continuously during activation of the power supply unit 110, or only at a predetermined time after the start of activation, for example at the start of activation.

When activation is complete (step S109), the inhalation device 100 is ready for use. At this time, for example, the aforementioned standby mode is set.

### 5-2. Second Example of Operation when the Power Source Unit is Replaced

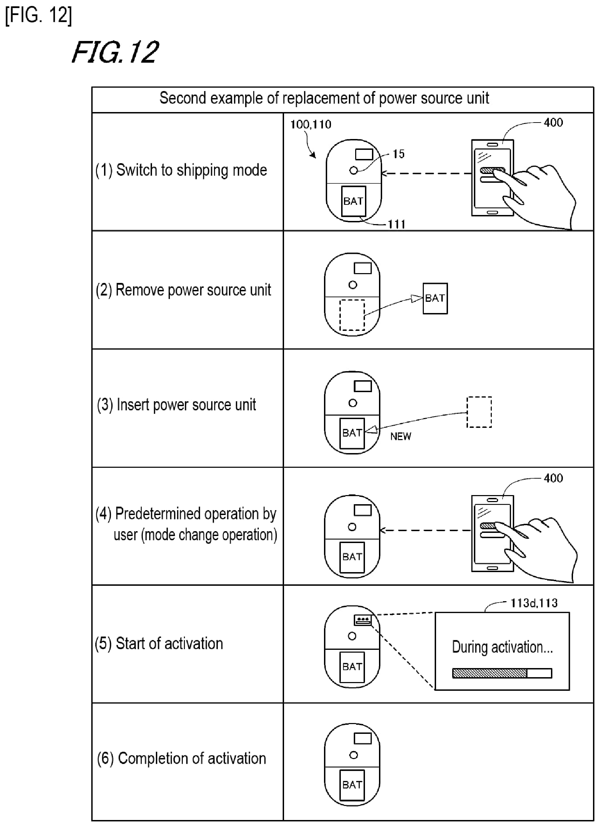

Fig. 12 shows a second example of user actions ((1) to (4) in Fig. 12) in chronological order, and operation of the power supply unit 110 ((5) and (6) in Fig. 12) when replacing the power source unit 111 mounted in the power supply unit 110 with a new power source unit 111. The second example differs from the first example in that the power supply unit 110 is activated in response to a software change to the power supply unit 110 by a user, specifically an operating mode change operation (hereinafter also referred to as a mode change operation), after mounting of the power source unit 111.

In the second example, when replacing the power source unit 111, the user first switches the operating mode of the control unit 116 to the shipping mode. Switching to the shipping mode is performed, for example, by input using the user's mobile terminal 400 that is communicating with the power supply unit 110, or input to the operation portion 15 provided in the power supply unit 110, and so on. After switching to the shipping mode, the user removes the power source unit 111 from the power supply unit 110 and installs a new power source unit 111. After mounting the new power source unit 111, when the user performs a predetermined mode change operation to transition the operating mode from shipping mode to standby mode, activation of the power supply unit 110 starts. The predetermined mode change operation is, for example, an input using the mobile terminal 400 or an input to the operation unit 15, and so on. Between the start of activation of the power supply unit 110 and the completion of the activation, a boot animation is displayed on the display device 113d, which is an example of the notification unit 113, as a video showing the activation. After activation of the power supply unit 110 is completed, the boot animation ends and the operating mode transitions from shipping mode to standby mode. In this way, the inhalation device 100 is ready for use.

As shown in (3) to (5) of Fig. 12, the power supply unit 110 is configured to not activate immediately when the power source unit 111 is mounted, but to activate when a predetermined mode change operation by the user is detected after mounting the power source unit 111. As with the first example previously described, the power supply unit 110 is activated when a user has made a mode change operation with the clear intention to activate the power supply unit 110, thereby preventing the occurrence of the inconvenience of repeated activation and shutdown of the power supply unit 110 during replacement of the power source unit 111.

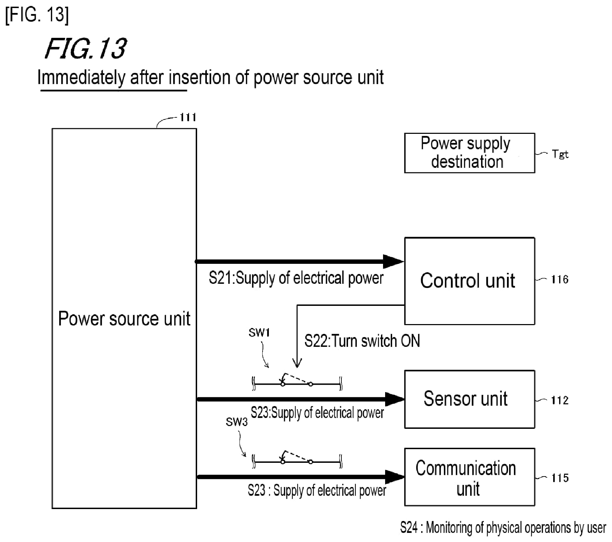

Fig. 13 shows the operation of the power supply unit 110 immediately after the power source unit 111 has been mounted. When the power source unit 111 is fitted into the power supply unit 110, the positive electrode terminal 111c and negative electrode terminal 111d of the power source unit 111 are electrically connected to the positive terminal connection 20a and the negative terminal connection 20b of the case 20, and power is supplied from the power source unit 111 to the control unit 116 (step S21). In this state, the control unit 116 is supplied with only minimal power, for example only enough power to allow signal exchange with the sensor unit 112 and the communication unit 115. In other words, most of the functions of the control unit 116 are not performed, for example no signal exchange is performed with the notification unit 113, the storage unit 114, or the heating unit 121.

Next, the control unit 116 turns ON switch SW1, which switches the electrical connection between the power source unit 111 and the sensor unit 112, and switch SW3, which switches the electrical connection between the power source unit 111 and the communication unit 115 (step S22). This energizes the power source unit 111 and the sensor unit 112, and the power source unit 111 and the communication unit 115, and supplies power from the power source unit 111 to the sensor unit 112 and the communication unit 115 (step S23). In this state, the sensor unit 112 is supplied with only minimal power, for example, power is supplied to the portion that senses that the operation portion 15 has been operated.

The sensor unit 112 and the communication unit 115 then monitor mode change operations performed by the user using the power supplied from the power source unit 111 (step S24). Note that if the mode change operation is configured to be performed only by the mobile terminal 400, power may not be supplied to the sensor unit 112. Also, if the mode change operation is configured to be performed only by input to the operation unit 15, for example, power may not be supplied to the communication unit 115.

From steps S21 to S24, the power supply unit 110 is not activated and the control unit 116, the sensor unit 112, and the communication unit 115 remain in operation with the minimum amount of power supply. The control unit 116 restricts power from being supplied to the predetermined power supply destinations Tgt from the power supply unit 110 until an operation to change the operating mode is input by a user. The predetermined power supply destinations Tgt include, for example, the notification unit 113, the memory unit 114, the heating portion 121, and so on. The predetermined power destinations Tgt may also include, for example, a battery level meter (not shown on the drawings) capable of measuring the remaining charge of the power source unit 111.

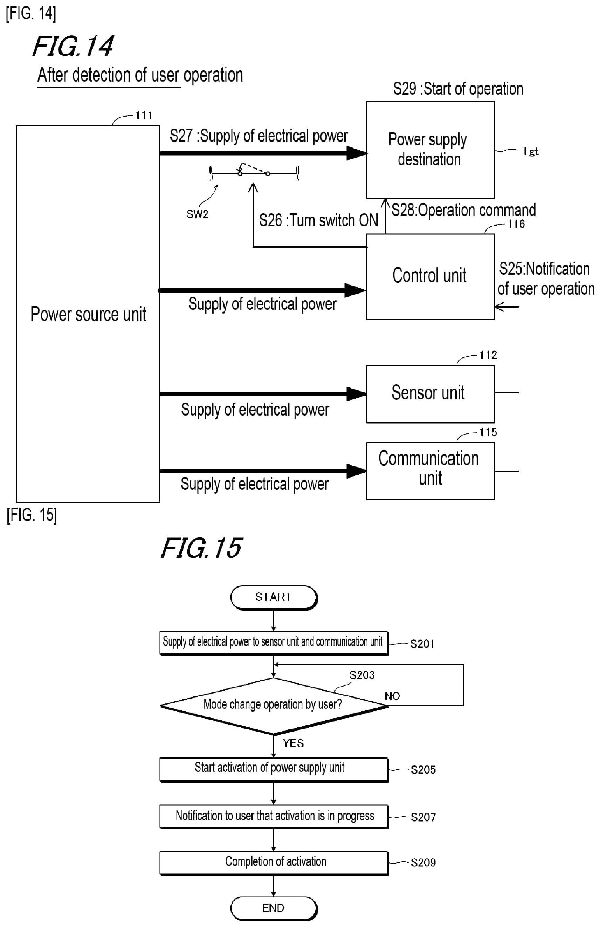

Fig. 14 shows the operation of the power supply unit 110 after step S24 when an operation to change the operating mode has been performed by a user. When the sensor unit 112 or the communication 115 detects that an operating mode change has been performed by a user, it notifies the control unit 116 that the operation has been performed (step S25).

The control unit 116 then turns ON the switch SW2, which switches the electrical connection between the power source unit 111 and the power supply destination Tgt (step S26). This energizes the power source unit 111 and the power supply destination Tgt, and supplies power from the power source unit 111 to the power supply destination Tgt (step S27).

The control unit 116 then provides an operation command to the power supply destination Tgt (step S28). This starts operation of the power supply destination Tgt (step S29), and starts activation of the power supply unit 110. During activation of the power supply unit 110, for example, the notification unit 113 performs a notification such as a boot animation. Also, the control unit 116 performs the process of changing various control values (such as nominal voltage and battery capacity) when a new power source unit 111 is installed.

Fig. 15 is also a flowchart showing a second example of the process performed by the control unit 116 from the mounting of the power source unit 111 to the completion of activation of the power supply unit 110.

When the power source unit 111 is attached in the power supply unit 110, the control unit 116 supplies power to the sensor unit 112 and the communication unit 115 (step S201). Because removal of the power source unit 111 is performed in the shipping mode, immediately after the power source unit 111 is attached, the control unit 116 is in the shipping mode that was selected immediately before removal of the power source unit 111.

Next, the control unit 116 determines whether or not a predetermined mode change operation has been performed by the user (step S203) If no mode change operation has been performed by the user (step S203: NO), the control unit 116 continues to wait in the shipping mode until this operation has been performed.

If a mode change operation is performed by the user (step S203: YES), the control unit 116 initiates activation of the power supply unit 110 (step S205).

During activation of the power supply unit 110, the control unit 116 notifies the user via the notification unit 113 that the power supply unit 110 is being activated (step S207).

When activation is complete (step S209), the inhalation device 100 is ready for use. At this time, the operating mode transitions from the shipping mode to the standby mode, for example.

Incidentally, in the second example described above, it was necessary for the user to switch the operating mode of the control unit 116 to the shipping mode before removing the power source unit 111. However, it is also conceivable that the power source unit 111 is removed before switching to the shipping mode. In this case, the configuration described above may not function, because it is not in shipping mode when the power source unit 111 is mounted, and the power supply unit 110 may start up immediately after the power source unit 111 is mounted.

Therefore, preferably the power supply unit 110 is configured to transition the operating mode to the shipping mode in response to the power source unit 111 being removed, even if the power source unit 111 is removed before switching to the shipping mode.

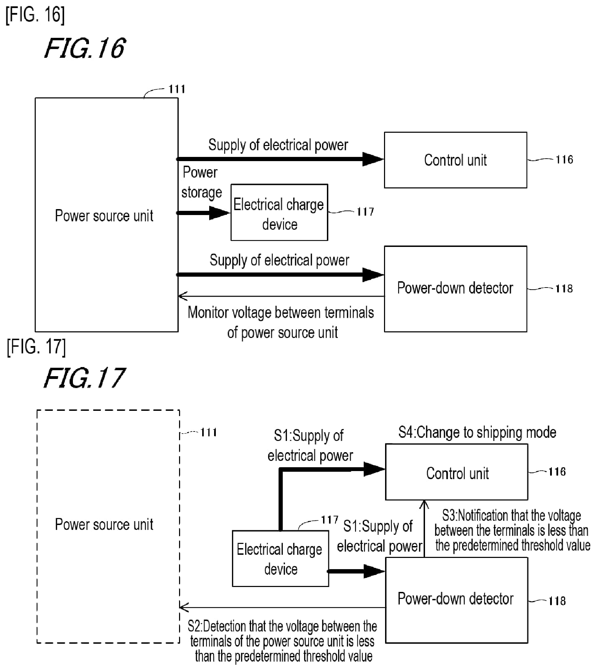

Fig. 16 is a diagram showing the flow of power supply of the power supply unit 110 when a mode other than shipping mode is selected with the power source unit 111 mounted, and Fig. 17 is a diagram showing the flow of power supply of the power supply unit 110 after the power source unit 111 has been removed before switching to shipping mode.

As shown in Figs. 16 and 17, the power supply unit 110 further comprises an electrical charge device 117 capable of storing power supplied from the power source unit 111, and a power-down detector 118 that detects the removal of the power source unit 111.

The electrical charge device 117 is for example a capacitor and is electrically connected and charged when the power source unit 111 is attached to the power supply unit 110. The electrical charge device 117 is configured to function as an auxiliary power source when the power source unit 111 is removed, and to temporarily supply power to the control unit 116 or the power-down detector 118, for example.

The power-down detector 118 is, for example, a voltage sensor and monitors the voltage between the terminals of the power source unit 111. For example, when the power-down detector 118 detects that the voltage between the terminals of the power source unit 111 has fallen below a predetermined threshold, the control unit 116 determines that the power source unit 111 has been removed.

Specifically described with reference to Fig. 17, if the power source unit 111 is removed before switching to the shipping mode, the electrical charge device 117 supplies the stored power to the power-down detector 118 and the control unit 116 (step S1). The power-down detector 118 detects that the terminal-to-terminal voltage of the power source unit 111 has fallen below the predetermined threshold using the power supplied from the electrical charge device 117 (step S2), and notifies the control unit 116 (step S3). Using the power supplied from the electrical charge device 117, the control unit 116 determines, based on the notification from the power-down detector 118, that the power source unit 111 has been removed, and transitions the operating mode to the shipping mode (step S4).

According to such a configuration, even if the user removes the power source unit 111 without changing to the shipping mode, it can be properly transitioned to the shipping mode after removal of the power source unit 111. Therefore, it is possible to configure the power supply unit 110 to be activated in response to a predetermined mode change operation by a user after mounting of the power source unit 111 as described above.

Note that the power-down detector 118 may be included in the control unit 116, in which case the power-down detector 118 comprises the functional configuration of the control unit 116 for monitoring the voltage between the terminals of the power source unit 111.

### 5-3. Variant of the Second Example of Operation when the Power Source Unit is Replaced

In the second example described above, the power source unit 111 was replaced by performing an operating mode change operation by the user or as a software change of the power supply unit 110, but this is not a limitation. For example, the power source unit 111 may be replaced by the user performing an operation to input a "request for power source unit replacement" to the power supply unit 110.

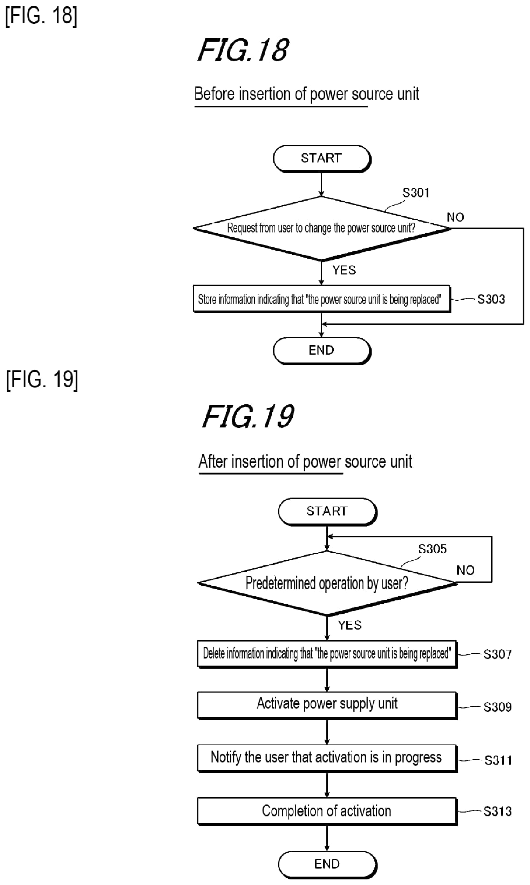

Figs. 18 and 19 are flowcharts showing an example of a process performed by the control unit 116 in a variant of the second example of operation when the power supply unit 111 is replaced. In particular, Figure 18 is a flowchart showing an example of a process performed by the control unit 116 before removal of the power source unit 111, and Figure 19 is a flowchart showing an example of a process performed by the control unit 116 immediately after mounting the the power source unit 111 in the power supply unit 110.

Before removal of the power source unit 111, the control unit 116 determines whether there is a request for replacement of the power source unit 111 from the user (step S301). A request to replace the power source unit 111 is an operation to notify the control unit 116 that a user is about to replace the power source unit 111, for example using a mobile terminal 400 in communication with the power supply unit 110 or the operation portion 15 provided on the power supply unit 110. When there is no user request to replace the power source unit 111 (step S301: NO), the control unit 116 exits the present flowchart.

When the user requests to replace the power source unit 111 (step S301: YES), the control unit 116 stores information indicating "power source unit being replaced", for example in the memory unit 114 (step S303). When the information indicating "power source unit being replaced" is stored, most of the functions of the power supply unit 110 are restricted, and the minimum necessary power from the power source unit 111 is supplied to the control unit 116, the sensor unit 112, and the communication unit 115 only, for example. Note that this information is retained in the memory unit 114 even after removal of the power source unit 111.

After the new power source unit 111 has been mounted, the control unit 116 receives power from the power source unit 111, enabling some functions to be performed. The control unit 116 determines whether there has been an input indicating that a predetermined operation by the user has been performed, specifically indicating that the replacement of the power source unit 111 has been completed (step S305). The input indicating that the replacement of the power source unit 111 has been completed is made using the mobile terminal 400 or the operation portion 15, similar to the power source unit 111 replacement request. In the absence of this input, the control unit 116 waits until there is an input without activating the power supply unit 110.

When there is an input indicating that the power source unit 111 has been replaced (step S307), the control unit 116 deletes the information stored in step S303 indicating that "the power source unit is being replaced." This releases the restriction on functions in the power supply unit 110, and enables activation of the power supply unit 110.

The control unit 116 then activates the power supply unit 110 (step S309). During activation of the power supply unit 110, the control unit 116 notifies the user via the notification unit 113 that the power supply unit 110 is being activated (step S311). When activation is complete (step S313), the inhalation device 100 is ready for use.

With such a configuration, even if the power supply unit 110 is configured not to specify an operating mode, the power source unit 111 can be replaced without causing the inconvenience of repeated start-up and shutdown of the power supply unit 110.

Embodiments of the present invention have been described above with reference to the drawings, but it goes without saying that the present invention is not limited to such embodiments. It is obvious that a person skilled in the art will be able to conceive of a number of variant examples or modified examples within the scope disclosed in the claims, and any such variant examples or modified examples are naturally understood to fall within the technical scope of the present disclosure. Furthermore, the components in the embodiments described above may be combined in any way within a scope that does not depart from the essential point of the invention.

The present specification, etc. sets forth at least the following features. Corresponding components, etc. in the embodiments described above are shown by way of example in parentheses, but there is no limitation to such components.
(1) A power supply unit (power supply unit 110) of an aerosol generation device (inhalation device 100) that generates an aerosol by heating an aerosol source, in which a replaceable power source (power supply unit 111) that can accumulate power is mounted, the power supply unit (power supply unit 110) comprising:
   a terminal connection (positive terminal connection 20a, negative terminal connection 20b) for electrically connecting with a terminal of the power source unit (positive electrode terminal 111c, negative electrode terminal 111d); and
   a control unit (control unit 116) for controlling the power supply unit, characterized in that the control unit activates the power supply unit when a predetermined action by a user is detected after the power source unit is connected to the terminal connection.

For example, if the power supply unit is configured to be activated automatically in response to the power source unit being mounted, there may be an inconvenience that the power supply unit starts up and shuts down repeatedly against the intention of the user during the operation of replacing the power source unit by the user. According to (1), after mounting of the power source unit, the power supply unit is activated in response to a predetermined operation by the user (in other words, the user's intention), so the occurrence of the inconvenience of repeated activation and shutdown of the power supply unit during such power source unit replacement operation can be prevented.

(2) The power supply unit of an aerosol generation device as disclosed in (1),
characterized in that
the control unit
controls the supply of electrical power from the power source unit to a predetermined power supply destination (power supply destination Tgt) provided by the power supply unit, and
activates the power supply unit by supplying power to the power supply destination when the predetermined operation by the user is detected after the power source unit is connected to the terminal connection.

According to (2), after mounting the power source unit, power is supplied to the predetermined power supply destination in response to a predetermined operation by the user, so it is possible to prevent power from being supplied to the predetermined power supply destination against the intention of the user during the operation of replacement of the power source unit.

(3) The power source unit for an aerosol generation device as disclosed in (1) or (2), further comprising
a notification unit (notification unit 113) for notifying the user that the power supply unit is being activated during activation of the power supply unit.

According to (3), the user is able to determine that the power supply unit has been activated by their action.

(4) The power supply unit of an aerosol generation device as disclosed in (3),
characterized in that
the notification unit comprises a display device (display device 113d) for displaying an image (boot animation) indicating that the power supply unit is being activated.

According to (4), the user can visually determine that the power supply unit has been activated by their action.

(5) The power supply unit of an aerosol generation device as disclosed in any of (1) to (4), characterized in that the predetermined operation comprises an operation of connecting the power supply unit to an external power source (external power source 1000).

According to (5), since connecting the power supply unit to an external device after mounting the power source unit is a user action performed with a clear intention, the occurrence of the inconvenience of repeated activation and shutdown of the power supply unit against the user's intention can be reliably prevented.

(6) The power supply unit of an aerosol generation device as disclosed in any of (1) to (5), characterized in that
the predetermined operation comprises closing a power supply accommodating portion (power supply accommodating portion 200), which is provided with the terminal connection and that houses the power source unit, with a lid member (bottom wall portion 21, panel 30).

According to (6), closing the power supply accommodating portion with the lid member after mounting the power source unit is an operation performed by the user with a clear intention, so the occurrence of the inconvenience of repeated activation and shutdown of the power supply unit against the user's intention can be reliably prevented.

(7) The power supply unit of an aerosol generation device as disclosed in any of (1) to (6), characterized in that
the predetermined operation comprises an operation on an operation portion (operation portion 15) provided on the power supply unit.

According to (7), operation of the operation unit after mounting of the power source unit is an operation performed by a user with a clear intention, so the occurrence of the inconvenience of repeated activation and shutdown of the power supply unit against the intention of the user can be reliably prevented.

(8) The power supply unit of an aerosol generation device as disclosed in any of (1) to (4), characterized in that
the predetermined operation comprises two or more of the following operations:
an operation of connecting the power supply unit to an external power source (external power source 1000),
an operation of closing with a lid member (bottom wall portion 21, panel 30) the power supply accommodating portion (power supply accommodating portion 200) provided with the terminal connection and housing the power source unit, and
an operation performed on an operation portion provided on the power supply unit.

According to (8), the power supply unit is activated when there is more than one action by the user, so that the power supply unit can be activated more reliably with the intention of the user.

(9) The power supply unit of an aerosol generation device as disclosed in any of (1) to (8), characterized in that
the control unit is configured to switch between a first mode (shipping mode), which is selected when the power source unit is replaced and restricts the supply of power from the power source unit to a predetermined power supply destination (power supply destination Tgt) provided in the power supply unit, and a second mode (standby mode), which is selected after the power source unit is installed and enables the supply of power from the power source unit to the power supply destination, and
the predetermined operation comprises an operation by the user to change from the first mode to the second mode.

According to (9), since the operation to change the mode is an operation of the user performed with a clear intention, the occurrence of the inconvenience of repeated activation and shutdown of the power supply unit against the intention of the user can be reliably prevented.

(10) The power supply unit of an aerosol generation device as disclosed in (9), further comprising
an electrical charge device (electrical charge device 117) capable of storing electrical power supplied from the power source unit, and
the control unit transitions from the second mode to the first mode using power stored in the electrical charge device when the power source unit is removed while the second mode is set.

According to (10), even if the power source unit is removed while the second mode is set, the power stored in the electrical charge device can be used to appropriately transition to the first mode, improving the safety of the power supply unit.

(11) The power supply unit of an aerosol generation device as disclosed in any of (1) to (10), further comprising
a sensor unit (sensor unit 112) for detecting the predetermined operation,
the control unit
controls the supply of power from the power source unit to the sensor unit,
power is supplied from the power source unit to the sensor unit after the power source unit is connected to the terminal connection and before activating the power supply unit, and
the sensor unit detects the predetermined operation using the power supplied from the power source unit.

According to (11), power is supplied to the sensor unit, which detects the predetermined operation even before activation of the power supply unit, so that the predetermined operation that triggers activation can be appropriately detected.

(12) The power source unit for an aerosol generation device as disclosed in (9) or (10), further comprising
a communication unit (communication unit 115) for communicating with an external terminal (mobile terminal 400) and for detecting the predetermined operation input to the external terminal,
the control unit
controls the supply of power from the power source unit to the communication unit,
power is supplied from the power source unit to the communication unit after the power source unit is connected to the terminal connection and before activating the power supply unit, and
the communication unit detects the predetermined operation from the external terminal using the power supplied from the power source unit

According to (12), power is supplied to the communication unit, which detects the predetermined operation input from the external terminal even before activation of the power supply unit, so that the predetermined operation that triggers activation can be properly detected.

### REFERENCE SIGNS LIST

15 operation portion
20a Positive terminal connection (terminal connection)
20b Negative terminal connection (terminal connection)
21 Bottom wall portion (lid member)
30 Panel (lid member)
100 Inhalation device (aerosol generation device)
110 Power supply unit
111 Power source unit
111c Positive electrode terminal (power source unit terminal)
111d Negative electrode terminal (power source unit terminal)
112 Sensor unit
113 Notification unit
113d Display device
115 Communication unit
116 Control unit
117 Electrical charge device
200 Power supply accommodating portion
400 Mobile terminal (external terminal)
1000 External power supply
Tgt Power supply destination

## Claims

1. A power supply unit of an aerosol generation device that generates an aerosol by heating an aerosol source, in which a replaceable power source that can accumulate power is mounted, the power supply unit comprising:
a terminal connection for electrically connecting with a terminal of the power source unit; and
a control unit for controlling the power supply unit, **characterized in that**
the control unit activates the power supply unit when a predetermined action by a user is detected after the power source unit is connected to the terminal connection.

2. The power supply unit of an aerosol generation device according to claim 1,
**characterized in that**
the control unit
controls the supply of electrical power from the power source unit to a predetermined power supply destination provided by the power supply unit, and
activates the power supply unit by supplying power to the power supply destination when the predetermined operation by the user is detected after the power source unit is connected to the terminal connection.

3. The power source unit for an aerosol generation device according to claim 1 or 2,,
further comprising
a notification unit for notifying the user that the power supply unit is being activated during activation of the power supply unit.

4. The power supply unit of an aerosol generation device according to claim 3,
**characterized in that**
the notification unit comprises a display device for displaying an image indicating that the power supply unit is being activated.

5. The power supply unit of an aerosol generation device according to any of claims 1 to 4, **characterized in that**
the predetermined operation comprises an operation of connecting the power supply unit to an external power source.

6. The power supply unit of an aerosol generation device as according to any of claims 1 to 5, **characterized in that**
the predetermined operation comprises closing a power supply accommodating portion, which is provided with the terminal connection and that houses the power source unit, with a lid member.

7. The power supply unit of an aerosol generation device according to any of claims 1 to 6, **characterized in that**
the predetermined operation comprises an operation on an operation portion provided on the power supply unit.

8. The power supply unit of an aerosol generation device according to any of claims 1 to 4, **characterized in that**
the predetermined operation comprises two or more of the following operations:
an operation of connecting the power supply unit to an external power source,
an operation of closing with a lid member a power supply accommodating portion provided with the terminal connection and housing the power source unit, and
an operation performed on an operation portion provided on the power supply unit.

9. The power supply unit of an aerosol generation device as according to any of claims 1 to 8, **characterized in that**
the control unit is configured to switch between a first mode, which is selected when the power source unit is replaced and restricts the supply of power from the power source unit to a predetermined power supply destination provided in the power supply unit, and a second mode, which is selected after the power source unit is installed and enables the supply of power from the power source unit to the power supply destination, and
the predetermined operation comprises an operation by the user to change from the first mode to the second mode.

10. The power supply unit of an aerosol generation device according to claim 9,
further comprising
an electrical charge device capable of storing electrical power supplied from the power source unit, and
the control unit transitions from the second mode to the first mode using power stored in the electrical charge device when the power source unit is removed while the second mode is set.

11. The power supply unit of an aerosol generation device as according to any of claims 1 to 10, further comprising
a sensor unit for detecting the predetermined operation,
the control unit
controls the supply of power from the power source unit to the sensor unit,
power is supplied from the power source unit to the sensor unit after the power source unit is connected to the terminal connection and before activating the power supply unit, and
the sensor unit detects the predetermined operation using the power supplied from the power source unit.

12. The power supply unit of an aerosol generation device according to claim 9 or 10, further comprising
a communication unit for communicating with an external terminal and for detecting the predetermined operation input to the external terminal,
the control unit
controls the supply of power from the power source unit to the communication unit,
power is supplied from the power source unit to the communication unit after the power source unit is connected to the terminal connection and before activating the power supply unit, and
the communication unit detects the predetermined operation from the external terminal using the power supplied from the power source unit.
